# EUROPÄISCHE PATENTSCHRIFT

(11) **EP 1 495 033 B1**
(45) Veröffentlichungstag und Bekanntmachung des Hinweises auf die Patenterteilung: **30.04.2008**
(21) Anmeldenummer: 03735264.8
(22) Anmeldetag: 15.04.2003
(51) Int. Cl.: C07F 7/16

(54) **VERFAHREN ZUR HERSTELLUNG VON HALOSILANEN UNTER MIKROWELLENENERGIEBEAUFSCHLAGUNG**
METHOD FOR PRODUCING HALOSILANES BY IMPINGING MICROWAVE ENERGY
PROCEDE DE PRODUCTION D'HALOSILANES PAR L'INTRODUCTION D'ENERGIE MICRO-ONDE

(30) Priorität: 17.04.2002 DE 10217139; 23.05.2002 DE 10222728; 17.06.2002 DE 10227041
(43) Veröffentlichungstag der Anmeldung: 12.01.2005
(73) Patentinhaber: Wacker Chemie AG, 81737 München (DE)
(72) Erfinder: AUNER, Norbert, Prof. Dr., 61479 Glashütten, Taunus (DE)
(74) Vertreter: Schuderer, Michael
(86) Internationale Anmeldenummer: PCT/DE2003/001270
(87) Internationale Veröffentlichungsnummer: WO 2003/087107

(56) Entgegenhaltungen:
- EP-A- 0 896 952
- WO-A-03/059815
- DE-A- 19 948 395
- DE-C- 19 534 922
- DATABASE CA [Online] CHEMICAL ABSTRACTS SERVICE, COLUMBUS, OHIO, US; GRIESSHAMMER, RUDOLF ET AL: "Manufacture of trichlorosilane by reduction of tetrachlorosilane in fluidized bed" retrieved from STN Database accession no. 131:338994 XP002255710 & CN 1 153 138 A (WACKER-CHEMIE GMBH, GERMANY) 2. Juli 1997 (1997-07-02)

## Beschreibung

Die vorliegende Erfindung betrifft ein Verfahren zur Herstellung von Silanen enthaltend an Silicium gebundenes Halogen.

Ein wichtiger Vertreter der Halosilane ist das Siliciumtetrachlorid (Tetrachlorsilan), bei dem es sich um eine wasserhelle, farblose leicht bewegliche, erstickend riechende, an der Luft rauchende Flüssigkeit handelt. Siliciumtetrachlorid wird zur Herstellung von Siliconen, Silanen und Kieselsäureestern, zur Gewinnung von Siliciumdioxid SiO₂, von sehr reinem Silicium sowie zur Oberflächenbehandlung von Polymeren und Metallen verwendet. Ein weiterer wichtiger Vertreter der Halosilane ist Siliciumtetrafluorid, welches beispielsweise durch die Reaktion von Siliciumdioxid mit Alkalifluorid und Schwefelsäure erhalten werden kann. Siliciumtetrafluorid ist im Gegensatz zu Siliciumtetrachlorid bei Raumtemperatur gasförmig.

Von den Silanen leiten sich eine Reihe von sehr hydrolyseempfindlichen Halogen-Substitutionsprodukten ab, die analog den Alkylhalogeniden, z.B. den Chlorkohlenwasserstoffen, aufgebaut sind. Beispielsweise stellen die Chlorsilanen Monochlorsilan und Dichlorsilan sowie Tetrafluorsilan und die wasserstoffhaltigen Fluorsilane Monofluorsilan, Difluorsilan und Trifluorsilan farblose Gase dar, während Trichlorsilan und Tetrachlorsilan flüssig sind. Weiterhin bekannt sind Bromsilane, die beispielsweise durch Bromierung von Silanen mittels Zinntetrabromid erhalten werden.

Chlorsilane finden Verwendung als Haftvermittler, zur Herstellung von Silylaminen und zur Einführung von Silicium in organische Verbindungen (Silylierung). Organochlorsilane, wie beispielsweise Methylchlorsilane, sind für die Herstellung von Siliconen von technischer Bedeutung. Die übrigen Derivate der Silane, die analog den entsprechenden Kohlenstoff-Verbindungen zu formulieren wären, wie beispielsweise Silanon, sind im allgemeinen mit Ausnahme der Silanole und Siloxane so instabil, dass von ihnen bisher allenfalls organisch substituierte Vertreter bekannt sind, wie z.B. Dimethylsilanon. Seit 1981 sind auch organische Derivate mit Si,Si- bzw. Si,C-Doppelbindungen bekannt (Disilen, Silabenzol, Methylensilan). Allerdings sind die Stabilitäten nicht mit denen analoger Kohlenstoff-Verbindungen zu vergleichen.

Es ist bekannt, Siliciumtetrachlorid herzustellen, indem man ein Gemisch aus geglühter Kieselsäure und Kohle im Chlorstrom erhitzt oder Ferrosilicium in Gegenwart von Siliciumcarbid SiC bei 500 - 1.000 °C chloriert. Eine kohlefreie Erzeugung von Siliciumtetrachlorid ist nicht möglich.

Ähnliche Verfahren finden zur Herstellung von weiteren Halosilanen Anwendung.

Aus dem deutschen Patent DE 195 34 922 C1 ist der Einsatz von Mikrowellenstrahlung zur Herstellung von Trichlorsilan bekannt. Bei diesem bekannten Verfahren wird Tetrachlorsilan in einem Fließbettreaktor reduziert, wobei im Reaktor ein Fließbett aus Silicium-Partikeln eingerichtet wird, die Silicium-Partikel durch Einstrahlen von Mikrowellenstrahlung in den Reaktor auf eine Temperatur von 300 bis 1.100 °C erhitzt werden und ein Tetrachlorsilan und Wasserstoff enthaltendes Reaktionsgas durch das Fließbett geleitet und mit den Silicium-Partikeln zur Reaktion gebracht wird, wobei ein Produktgas entsteht, das Trichlorsilan enthält.

Aus der deutschen Offenlegungsschrift DE 199 48 395 A1 sind ein strahlungsbeheizter Fließbettreaktor und ein Verfahren zur Herstellung von hochreinem polykristallinen Silicium mittels dieses Reaktors bekannt. Als Strahlungsquelle findet eine solche für Wärmestrahlung Verwendung, wobei die Wärmestrahlung mit Hilfe einer Mikrowellenheizung erzeugt werden kann.

Der Erfindung liegt die Aufgabe zugrunde, ein einfach und wirtschaftlich durchzuführendes Verfahren zur Herstellung von Halosilanen anzugeben, das sich mit einem besonders geringen Energieeinsatz durchführen lässt.

Die vorstehend wiedergegebene Aufgabe wird mit der vorliegenden Erfindung betreffend ein Verfahren zur Herstellung von Halogen enthaltenden Silanen der allgemeinen Formel (I):

**RₐH_{b}SiX_{c}** (I)

wobei
R einen substituierten oder unsubstituierten Alkyl- oder Arylrest mit 1 bis 10 C-Atomen, bei dem ein oder mehrere C-Atome durch -CO-, -CO₂-, -O-, -S-, -SO-, -SO₂-, -NH- oder -NR'-, wobei R' ein substituierter oder unsubstituierter Alkylrest mit 1 bis 20 C-Atomen ist, ersetzt sein können,
X Fluor, Chlor oder Brom,
a eine ganze Zahl 0, 1, 2 oder 3,
b eine ganze Zahl 0, 1, 2 oder 3 und
c eine ganze Zahl 1, 2, 3 oder 4
bedeutet, unter der Maßgabe, dass die Summe a + b + c = 4 ist, dadurch gekennzeichnet, dass Silicium unter der Einwirkung von Mikrowellenenergie mit Gemischen der Elemente oder Verbindungen ausgewählt aus der Gruppe bestehend aus Halogenen oder Halogenen und Organohalogenverbindungen oder Halogenen und Wasserstoff oder Halogenen und Halogenwasserstoffen oder Organohalogenverbindungen oder Organohalogenverbindungen und Wasserstoff oder Organohalogenverbindungen und Halogenwasserstoff oder Halogenwasserstoffen oder Fluorsilanen und Wasserstoff oder Fluorsilanen und Halogenwasserstoff oder wasserstoffhaltigen Chlorsilanen und Wasserstoff oder wasserstoffhaltigen Chlorsilanen und Halogenwasserstoffen oder Organohalogensilanen und Wasserstoff oder Organohalogensilanen und Halogenwasserstoffen oder Kohlenwasserstoffen und Halogenwasserstoffen umgesetzt wird, gelöst.

Mit dem erfindungsgemäßen Verfahren lassen sich Halosilane, im Gegensatz zu dem eingangs aufgezeigten Stand der Technik mit einem besonders geringen Energieeinsatz herstellen. Das erfindungsgemäße Verfahren hat weiterhin den Vorteil gegenüber den Verfahren des Stands der Technik, dass Silane mit einer erhöhten Selektivität hergestellt werden können. Im Gegensatz zu den bisher bekannten Verfahren kann im erfindungsgemäßen Verfahren auch Silicium eingesetzt werden, dass beispielsweise als Abfall beim Siliciumkristallziehen oder Siliciumpolykristallherstellung für die Elektrovoltaik oder verunreinigt anfällt. Dies weist einen hohen Kostenvorteil auf. Das erfindungsgemäße Verfahren kann weiterhin vorzugsweise ohne Katalysator ablaufen, wodurch das Verfahren vereinfacht und Kosten eingespart werden können.

Bei der Durchführung des erfindungsgemäßen Verfahrens hat sich gezeigt, dass das Silicium besser reagiert, je größer dessen Korngröße ist. So wird vorzugsweise erfindungsgemäß Silicium mit einer Korngröße von > 70 µm verwendet.

Vorzugsweise wird kristallines, insbesondere grobkristallines, Silicium eingesetzt. Hierbei können auch Einkristalle, beispielsweise aus Wafer-Abfallstücken, eingesetzt werden. Dies schließt jedoch nicht aus, dass auch amorphes Silicium eingesetzt werden kann. Vorzugsweise wird dieses im Gemisch mit kristallinem Silicium unterschiedlicher Reinheitsgrade verwendet, wobei sich besonders gute Reaktionsergebnisse gezeigt haben.

Bei einer weiteren Ausführungsform des erfindungsgemäßen Verfahrens setzt man Silicium in Verbindung mit einem Katalysator bzw. Promotor ein. Derartige Katalysatoren bzw. Promotoren sind vorzugsweise Metalle oder Metallverbindungen, insbesondere Kupfer.

Bei einer anderen Variante setzt man Silicium in Verbindung mit einer Mikrowellenenergie absorbierenden und thermische Energie auf Silicium übertragenden Substanz ein. Diese Substanz kann gleichzeitig als Katalysator bzw. Promotor wirken. Eine solche Substanz ist beispielsweise Kupfer.

Mit derartigen Substanzen und bzw. oder Katalysatoren bzw. Promotoren lässt sich insbesondere amorphes Silicium oder Silicium mit einer relativ geringen Korngröße, beispielsweise unter 70 µm, umsetzen.

Wenn man daher davon ausgeht, dass die Reaktionsfähigkeit des Siliciums beim erfindungsgemäßen Verfahren Korngrößen abhängig ist, wird vorzugsweise bei höheren Korngrößen, beispielsweise > 70 µm, nur mit Silicium gearbeitet, während man bei geringeren Korngrößen zusätzlich entsprechende Substanzen einsetzt, die die Reaktion fördern (Katalysatoren, Promotoren, Mikrowellenenergie absorbierende Substanzen etc.).

Wie erwähnt, wird das Silicium zur Umsetzung mit einer Gasatmosphäre des Halogens oder der Halogenverbindung gegebenenfalls unter Zusatz von Edelgasen, vorzugsweise Argon, kontaktiert. Bevorzugt werden Gasatmosphären aus dem Halogen selbst oder Halogenwasserstoffverbindungen verwendet, wobei zur Herstellung von Siliciumtetrachlorid eine Chlor-Atmosphäre eingesetzt wird. Weiterhin können auch Organohalogenverbindungen eingesetzt werden.

Damit die erfindungsgemäße Umsetzung kontinuierlich abläuft, wird vorzugsweise nicht-gepulste Mikrowellenenergie eingesetzt. Zur Erzeugung der gewünschten Mikrowellenenergie kann auf bekannte Mikrowellenöfen zurückgegriffen werden. Bei exotherm verlaufenden Reaktionen wird vorzugsweise gepulste Mikrowellenenergie insbesondere zur Initiierung eingesetzt.

Die Durchführung des erfindungsgemäßen Verfahrens wird nachfolgend anhand eines Ausführungsbeispieles erläutert. Das Verfahren wurde im Labormaßstab durchgeführt.

Um normale Glasapparaturen und Inertgasmethoden drucklos verwenden zu können, wurde ein modifizierter Haushaltsmikrowellenofen verwendet. Der Sicherheitskäfig des Ofens wurde an drei Stellen mit Bohrungen versehen. Diese Bohrungen hatten einen Abstand von 10 cm, wobei die mittlere Bohrung zentrisch angeordnet wurde. Um zu gewährleisten, dass die Apparatur immer im aktiven Bereich des Ofens lag, bildeten die Bohrungen eine Linie mit der Austrittsöffnung des Magnetrons. Die normale Drehung des Tellers wurde durch Verwendung einer Keramikfliese unterbunden, die keine Verbindung zur Antriebseinheit besaß.

Um eine Freisetzung von Energie in die Umgebung zu verhindern, wurden die drei Bohrlöcher jeweils mit Hilfe eines 12 cm langen Kupfertubus abgeschirmt. Die Länge des Tubus entsprach der Wellenlänge der verwendeten Frequenz von 2.450 MHz (etwa 12 cm), die für diese Öfen obligatorisch ist. Distanzstücke aus Laborglas ermöglichten den Anschluss von üblichem Laborequipment.

Es wurde ein Mikrowellenofen der Firma Panasonic (Modell NN-T251) verwendet, der bei reduzierter Leistung kontinuierlich einstrahlte und nicht pulste.

Im Mikrowellenofen wurde ein U-Rohr angeordnet. Im U-Rohr wurde eine abgewogene Menge Silicium auf einem etwas ausgehöhlten Schamottestein vorgelegt.

Zur Anwendung kam eine Charge von kristallinem Silicium mit einer Reinheit von 99.99 % und einer Korngröße von 70 - 400 µm. Nach dem Evakuieren und Belüften mit einer Argon-Atmosphäre wurde Cl₂ und/oder HCl und/oder CH₃Cl durch die Apparatur geleitet. Das Gas durchströmte vorher noch eine Waschflasche mit konzentrierter Schwefelsäure bzw. im Falle von Methylchlorid mit Parafinöl und wurde nach der Reaktion mittels einer Kühlfalle, die vorzugsweise auf eine entsprechende Temperatur im Bereich von -78°C bis -150°C gekühlt oder beispielsweise mit flüssigem Stickstoff gefüllt war, ausgefroren.

Nachdem die Cl₂ und/oder HCl und/oder CH₃Cl-Atmosphäre um das Silicium herum aufgebaut worden war, wurde der Mikrowellenofen mit einer Leistung von 250 W eingeschaltet, und es wurde abgewartet bis das Silicium unter Glühen weitgehend abreagiert hatte. Dies erfolgte sowohl bei Cl₂ als auch bei HCl und CH₃Cl nach ca. 5 min. Das Cl₂ und/oder HCl und/oder CH₃Cl wurde daraufhin durch Argon ersetzt, und die Kühlfalle wurde aufgetaut.

In den drei Fällen liefen folgende Reaktionen ab:
0,4 g Si + Cl₂(g) → SiCl₄ (isolierte Ausbeute: 1,17 g = 48,75%)
0,4 g Si + HCl(g) →HSiCl₃ + SiCl₄⁺ weitere Silane (isolierter Ausbeute: 1,62 g = 60% bezogen auf Si)
0.4 g Si + CH₃Cl → Me₂SiCl₂ (50 %) + MeSiCl₃ (20 %) + Me₃SiCl (30 %)

Durch Verdünnen des Methylchlorid- oder Chlorwasserstoff-Gases mit Argon lässt sich die Ausbeute an Dimethyldichlorsilan oder Trichlorsilan noch weiter erhöhen:
0,4 g Si + CH₃Cl/Ar (1:4) → Me₂SiCl₂ (87 %) + MeSiCl₃ (4%) + Me₃SiCl (9 %)
0,4 g Si + HCl/Ar (1:4) → HSiCl₃ (> 99 %)

Daneben werden noch geringere Menge an SiCl₄ nachgewiesen.

Analog kann auch die Bildung von Fluorsilanen durch den Argonpartialdruck gesteuert werden.

Durch die vorstehend beschriebene Reaktion mit Methylchlorid wird eine neue direkte Synthese zur Verfügung gestellt.

Als weitere Halogenverbindung sind speziell ungesättigte Halogenkohlenwasserstoffe, wie beispielsweise Vinylchlorid, Allylchlorid etc. sowie die entsprechenden Bromide erfindungsgemäß verwendbar.

Eine Alkylierung am Silicium lässt sich in einer weiteren erfindungsgemäßen Ausführung durch die Reaktion von Kohlenwasserstoffen, wie beispielsweise Methan oder Ethan, in Verbindung mit Halogenwasserstoff, wie beispielsweise Chlorwasserstoff, mit Silicium unter Mikrowellenenergieeintrag durchführen. In einer bevorzugten Ausführung bildet sich beispielsweise Methylchlorsilan in Ausbeuten von 5 bis 10 %.
Si + CH₄/HCl (1/1) → MeSiCl₃ (5-10 %) + HSiCl₃ (25 %) + SiCl₄ (65-70 %)

Aus Kostengründen kann man als Silicium auch Siliciumlegierungen, insbesondere Ferrosilicium, einsetzen. Ferrosilicium kann einen unterschiedlichen Fe-Gehalt aufweisen und sämtliche Partikelgrößen besitzen. Hierdurch wird eine wesentliche Kostenreduktion erreicht.

Der Einsatz von beispielsweise CH₃Cl/HCl- und CH₃Cl/Cl₂- sowie von HCl/Cl₂-Gemischen gegebenenfalls unter Zusatz von Wasserstoff führt zu unterschiedlichen SiH-haltigen Produkten: MeHSiCl₂, MeH₂SiCl, H₃SiCl, H₂SiCl₂, Cl₃SiH. Durch den Zusatz von Cl₂ wird der Chlorgehalt erhöht. Eine Erhöhung von HCl führt zu einem höheren SiR-Gehalt. Dies bedeutet, dass das Mischen von Reaktionsgasen, beispielsweise auch H₂C=CHCl/CH₃Cl, H₂C=CH-CH₂Cl/CH₃Cl bzw. H₂C=CH-Cl, zu einer unterschiedlichen Organosubstitution am Silicium führt.
Beispiel: 98,5 % Ferro-Si, CH₃Cl/Ar 1:1
MeSiCl₃ 6,4 %
Me₂SiCl₂ 82 %
Me₃SiCl 11,6 %

Durch Verdoppelung der Ar-Menge lässt sich der Me₂SiCl₂-Gehalt auf > 90% steigern.

Die eingangs angegebene Aufgabe wird durch die Erfindung ferner gemäß einem zweiten Verfahrensweg durch ein Verfahren zur Herstellung von Verbindungen des Typs XₙSiH₄₋ₙ wobei X Halogen und n 1-3 bedeuten, durch Kontaktieren von Gemischen von SiF₄ oder wasserstoffhaltigen Halosilanen, wie beispielsweise wasserstoffhaltigen Fluorsilanen oder wasserstoffhaltigen Chlorsilanen, und Wasserstoff und/oder Halogenwasserstoffgasen mit elementarem Silicium unter Mikrowellenanregung gelöst.

Verbindungen dieses Typs, wobei X vorzugsweise Fluor oder Chlor bedeutet, sind geeignete Ausgangsverbindungen zur thermolytischen Erzeugung von hochreinem Silicium, das beispielsweise als Halbleiter-Silicium, für Solarzellen, die Photovoltaik etc. Verwendung finden kann. Ihre Synthesen erfolgen bisher beispielsweise durch Hydrierung entsprechender Halosilane mit Hydrierungsreagenzien oder durch gezielte Komproportionierungsreaktionen zum Teil unter Mithilfe geeigneter Katalysatoren.

Als Ausgangsprodukt für das erfindungsgemäße Verfahren findet beispielsweise SiF₄ Verwendung. SiF₄ lässt sich aus qualitativ niedrigen und damit kostengünstigen Si-Chargen oder auch aus Sand/Silikaten und Fluorsilikaten herstellen. Siliciumtetrafluorid ist beispielsweise durch Umsetzung von Siliciumdioxidquelle auch niedriger Qualität, wie beispielsweise Sand, mit Fluorwasserstoff direkt darstellbar und bietet sich somit als attraktive Ausgangssubstanz zur Erzeugung von Fluorsilanen an.

Die Aufreinigung dieser Substanzen durch Kondensation (X = F) oder Destillation (X = Cl) ist leicht durchführbar.

Mit Siliciumtetrafluorid bzw. -chlorid liegen zwar geeignete Ausgangsmaterialien für die pyrolytische Erzeugung von hochreinem Silicium vor, jedoch sind die Zersetzungstemperaturen sehr hoch (T >> 1.200 °C) und es entstehen aggressive Gase (Fluor, Chlor), was zu Korrosions- und Apparateproblemen führt. Deswegen ist der partielle Austausch des Halogens durch Wasserstoff wünschenswert. Die zur Abspaltung von HX benötigten Reaktionstemperaturen liegen im Vergleich zum X₂ deutlich niedriger (~700 - 1.400 °C).

Es wurde nunmehr erfindungsgemäß festgestellt, dass sich dieser partielle Austausch von Halogen durch Wasserstoff durch Kontaktieren von SiF₄ oder wasserstoffhaltigen Halosilanen, wie beispielsweise wasserstoffhaltigen Fluorsilanen oder wasserstoffhaltigen Chlorsilanen, und von Wasserstoff und/oder Halogenwasserstoffgasen HX mit elementarem Silicium auf einfache und wirtschaftliche Weise unter Mikrowellenanregung durchführen lässt. In diesem Verfahren werden Verbindungen des Typs X₃SiH, X₂SiH₂ und XSiH₃ hergestellt, wobei X bevorzugt Cl, F bedeutet. Diese Verbindungen bilden geeignete Silicium-Precursoren, aus denen durch pyrolytische Zersetzung hochreines Silicium gewonnen werden kann. Je nach Zersetzungstemperatur fällt das Silicium amorph (T < 800 °C) oder kristallin (T > 1.000 °C) an. Im Temperaturbereich zwischen ca. 750 und 1.000 °C können auch Mischungen anfallen.

Vorzugsweise wird eine Mischung aus dem SiF₄ oder wasserstoffhaltigen Halosilanen, wie beispielsweise wasserstoffhaltigen Fluorsilanen oder wasserstoffhaltigen Chlorsilanen, und Wasserstoff und/oder Halogenwasserstoff HX mit dem elementaren Silicium kontaktiert. Vorzugsweise wird diese Mischung zweckmäßigerweise über das Silicium geleitet. Weitere erfindungsgemäße Ausführungsformen sind die Verwendung von Festbett- oder Wirbelschichtreaktoren.

Erfindungsgemäß kann Silicium auch Ferrosilicium mit unterschiedlichen Siliciumgehalten von vorzugsweise mindestens 50%, besonders bevorzugt von 98,5 % , umfassen. Das erfindungsgemäße Verfahren lässt sich daher auch mit Ferrosilicium durchführen.

Ein Vorteil des erfindungsgemäßen Verfahrens besteht darin, dass sich durch Variation des Wasserstoff-, Halogenwasserstoff/Wasserstoff- bzw. des Halogen/Wasserstoff-Partialdrucks der durchschnittliche Hydrierungsgrad der Produkte einregulieren lässt. Eine hohe H₂- bzw. HX-Konzentration führt vorzugsweise zur Bildung von Halosilanen mit hohem Hydrierungsgrad, wie beispielsweise X₂SiH₂ oder XSiH₃, während ein geringer Wasserstoff- bzw. Halogenwasserstoff-Partialdruck vorzugsweise zur Bildung von Halosilanen mit niedrigem Hydrierungsgrad, wie beispielsweise X₃SiH, führt.

Die Gegenwart von elementarem Silicium im Reaktionsraum ist essentiell. Beispielsweise reagiert SiF₄ mit Si unter Mikrowellenanregung offensichtlich zum intermediären Difluorsilylen nach der Formel SiF₄ + Si → 2F₂Si, das beispielsweise mit Wasserstoff primär zum Dihalogensilan F₂SiH₂ abreagiert. Durch Komproportionierung und Redistribution, beispielsweise F₂SiH₂ + SiF₄ → SiHF₃, entstehen die gemischten Fluorsilane FₙSiH₄₋ₙ.

F₃SiH + H₃SiF → 2SiH₂F₂

H₂SiF₂ + H₃SiF → H₅Si₂F₃ = F₃SiH + SiH₄

Das aus der Reaktion SiX₄ mit Silicium resultierende Silylen X₂Si ist im Falle von F₂Si stabiler und langlebiger als Cl₂Si. Folgereaktionen werden leichter steuerbar. Bei Erwärmung, beispielsweise Auftauen der Matrix (T > 35 K), bildet F₂Si im Gegensatz zum Cl₂Si ein polymeres Perfluorpolysilan. Diese (F₂Si)ₓ bildet unter Pyrolysebedingungen SiF₄ und Silicium (Transportreaktion)

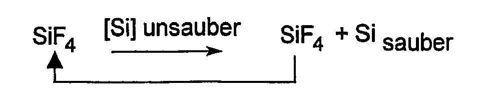

Wie bereits erwähnt, kann die erfindungsgemäße Reaktion auch mit Halogenwasserstoffgas HX als Reaktionspartner durchgeführt werden.

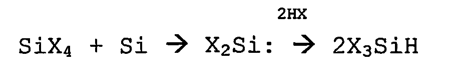

Wenn auf erfindungsgemäße Weise ein Gemisch aus verschiedenen Verbindungen des Typs XₙSiH₄₋ₙ hergestellt wird, wird das erhaltene Gemisch vorzugsweise durch Tieftemperaturdestillation (Kondensation) oder Flüssigdestillation in die einzelnen Verbindungen getrennt oder aufgereinigt. Dabei wird das erhaltene Gemisch zweckmäßigerweise in einem gekühlten Auffangsystem gesammelt bzw. ausgefroren, wonach die Destillation durchgeführt wird.

Wird die gewonnene Verbindung XₙSiH₄₋ₙ oder das entsprechende Verbindungsgemisch zur Gewinnung von hochreinem Silicium pyrolytisch zersetzt, so werden vorzugsweise die bei der pyrolytischen Zersetzung gebildeten Gase (Halogen X₂ oder Halogenwasserstoff HX) im Sinne eines Recyclings wieder in das System eingeführt oder direkt zur Synthese von SiX₄ wiederverwendet.

Abschließend sei noch bemerkt, dass die erhaltenen Gemische (XₙSiH₄₋ₙ) zur pyrolytischen Erzeugung von Si nicht unbedingt aufgereinigt werden müssen. Auch aus dem Gemisch ist Silicium erzeugbar.

## Patentansprüche

1. Verfahren zur Herstellung von Halogen enthaltenden Silanen der allgemeinen Formel (I):
**RₐH_{b}SiX_{c}** (I)
wobei
R einen substituierten oder unsubstituierten Alkyl- oder Arylrest mit 1 bis 10 C-Atomen, bei dem ein oder mehrere C-Atome durch -CO-, -CO₂-, -O-, -S-, -SO-, -SO₂-, -NH- oder - NR'-, wobei R' ein substituierter oder unsubstituierter Alkylrest mit 1 bis 20 C-Atomen ist, ersetzt sein können,
X Fluor, Chlor oder Brom,
a eine ganze Zahl 0, 1, 2 oder 3,
b eine ganze Zahl 0, 1, 2 oder 3 und
c eine ganze Zahl 1, 2, 3 oder 4
bedeutet, unter der Maßgabe, dass die Summe a + b + c = 4 ist, **dadurch gekennzeichnet, dass** Silicium unter der Einwirkung von Mikrowellenenergie mit Gemischen der Elemente oder Verbindungen ausgewählt aus der Gruppe bestehend aus Halogenen oder Halogenen und Organohalogenverbindungen oder Halogenen und Wasserstoff oder Halogenen und Halogenwasserstoffen oder Organohalogenverbindungen oder Organohalogenverbindungen und Wasserstoff oder Organohalogenverbindungen und Halogenwasserstoff oder Halogenwasserstoffen oder Fluorsilanen und Wasserstoff oder Fluorsilanen und Halogenwasserstoff oder wasserstoffhaltigen Chlorsilanen und Wasserstoff oder wasserstoffhaltigen Chlorsilanen und Halogenwasserstoffen oder Organohalogensilanen und Wasserstoff oder Organohalogensilanen und Halogenwasserstoffen oder Kohlenwasserstoffen und Halogenwasserstoffen umgesetzt wird.

2. Verfahren nach Anspruch 1, **dadurch gekennzeichnet, dass** Silicium mit einer Gasatmosphäre eines Halogens oder einer Halogenverbindung kontaktiert und mit Mikrowellenenergie beaufschlagt.

3. Verfahren nach Anspruch 1 oder 2, **dadurch gekennzeichnet, dass** man kristallines, insbesondere grobkristallines, Silicium verwendet.

4. Verfahren nach Anspruch 1 oder 2, **dadurch gekennzeichnet dass** man amorphes Silicium verwendet.

5. Verfahren nach Anspruch 4, **dadurch gekennzeichnet, dass** man amorphes Silicium im Gemisch mit kristallinem Silicium verwendet.

6. Verfahren nach mindestens einem der Ansprüche 1 bis 5, **dadurch gekennzeichnet, dass** man Silicium in Verbindung mit einem Katalysator oder Promotor einsetzt.

7. Verfahren nach mindestens einem der Ansprüche 1 bis 6, **dadurch gekennzeichnet, dass** man Silicium in Verbindung mit einer Mikrowellenenergie absorbierenden und thermische Energie auf Silicium übertragenden Substanz einsetzt.

8. Verfahren nach mindestens einem der Ansprüche 1 bis 7, **dadurch gekennzeichnet, dass** Halogenwasserstoff verwendet wird.

9. Verfahren nach mindestens einem der Ansprüche 1 bis 8, **dadurch gekennzeichnet, dass** man als Katalysator oder Promotor Metalle oder Metallverbindungen, insbesondere Cu, einsetzt.

10. Verfahren nach mindestens einem der Ansprüche 1 bis 9, **dadurch gekennzeichnet, dass** nicht-gepulste Mikrowellenenergie eingesetzt wird.

11. Verfahren nach mindestens einem der Ansprüche 1 bis 10, **dadurch gekennzeichnet, dass** man Silicium mit einer Korngröße von > 70 µm verwendet.

12. Verfahren nach mindestens einem der Ansprüche 1 bis 11, **dadurch gekennzeichnet, dass** man als Halogenverbindung Organohalogenverbindungen, insbesondere Alkyl- oder Arylhalogenide, speziell Methylchlorid, verwendet.

13. Verfahren nach mindestens einem der Ansprüche 1 bis 12, **dadurch gekennzeichnet**, dag man als Silicium Siliciumlegierungen, insbesondere Ferrosilicium, einsetzt.

14. Verfahren nach Anspruch 1, **dadurch gekennzeichnet, dass** zur Herstellung von Verbindungen des Typs FₙSiH₄₋ₙ, wobei n = 1-3 bedeutet, elementares Silicium unter Mikrowellenanregung mit Gemischen aus Fluorsilanen mit Wasserstoff oder Fluorwasserstoff oder Wasserstoff und Fluorwasserstoff kontaktiert wird.

15. Verfahren nach Anspruch 14, **dadurch gekennzeichnet, dass** zur Herstellung von Verbindungen des Typs FₙSiH₄₋ₙ, wobei n = 1-3 bedeutet, elementares Silicium unter Mikrowellenanregung mit Gemischen aus SiF₄-Gas mit Wasserstoff oder Fluorwasserstoff oder Wasserstoff und Fluorwasserstoff kontaktiert wird.

16. Verfahren nach Anspruch 1, **dadurch gekennzeichnet, dass** zur Herstellung von Verbindungen des Typs ClₙSiH₄₋ₙ, wobei n = 1-3 bedeutet, elementares Silicium unter Mikrowellenanregung mit Gemischen aus wasserstoffhaltigen Chlorsilanen mit Wasserstoff oder Chlorwasserstoff oder Wasserstoff und Chlorwasserstoff kontaktiert wird.

17. Verfahren nach mindestens einem der Ansprüche 14 bis 16, **dadurch gekennzeichnet, dass** ein Gemisch aus verschiedenen Verbindungen des Typs XₙSiH₄₋ₙ, wobei X Fluor oder Chlor bedeutet, hergestellt wird.

18. Verfahren nach Anspruch 17, **dadurch gekennzeichnet, dass** das Gemisch durch Tieftemperaturdestillation (Kondensation) oder Flüssigdestillation getrennt wird.

19. Verfahren nach einem der Ansprüche 14 bis 18, **dadurch gekennzeichnet, dass** durch Variation des Wasserstoff- oder Halogenwasserstoff oder Wasserstoff- und Halogenwasserstoff-Gasdrucks der Hydrierungsgrad einreguliert wird.

20. Verfahren nach mindestens einem der Ansprüche 14 bis 19, **dadurch gekennzeichnet, dass** die gewonnenen Verbindungen XₙSiH₄₋ₙ, wobei X Fluor oder Chlor bedeutet, zur Gewinnung von hochreinem Silicium pyrolytisch zersetzt werden.

21. Verfahren nach Anspruch 20, **dadurch gekennzeichnet, dass** die bei der pyrolytischen Zersetzung gebildeten Gase im Sinne eines Recyclings wieder in das System eingeführt oder direkt zur Synthese von SiX₄, wobei X Fluor oder Chlor bedeutet, wiederverwendet werden.

22. Verfahren nach Anspruch 1, **dadurch gekennzeichnet, dass** elementares Silicium unter Mikrowellenanregung mit Gemischen aus Organohalogenverbindungen mit Wasserstoff oder Halogenwasserstoff oder Wasserstoff und Halogenwasserstoff kontaktiert wird.

23. Verfahren nach Anspruch 1, **dadurch gekennzeichnet, dass** als Kohlenwasserstoff Methan oder Ethan verwendet wird.

## Claims

1. Process for preparing halogen-containing silanes of the general formula (I):
**RₐH_{b}SiX_{c}** (I)
where
R is a substituted or unsubstituted alkyl or aryl radical having from 1 to 10 carbon atoms of which one or more may be replaced by -CO-, -CO₂-, -O-, -S-, -SO-, -SO₂-, -NH- or -NR'-, where R' is a substituted or unsubstituted alkyl radical having from 1 to 20 carbon atoms,
X is fluorine, chlorine or bromine,
a is an integer of 0, 1, 2 or 3,
b is an integer of 0, 1, 2 or 3 and
c is an integer of 1, 2, 3 or 4,
with the proviso that the sum of a + b + c = 4, **characterized in that** silicon, under the action of microwave energy, is reacted with mixtures of the elements or compounds selected from the group consisting of halogens or halogens and organohalogen compounds or halogens and hydrogen or halogens and hydrogen halides or organohalogen compounds or organohalogen compounds and hydrogen or organohalogen compounds and hydrogen halide or hydrogen halides or fluorosilanes and hydrogen or fluorosilanes and hydrogen halide or hydrogencontaining chlorosilanes and hydrogen or hydrogencontaining chlorosilanes and hydrogen halides or organohalosilanes and hydrogen or organohalosilanes and hydrogen halides or hydrocarbons and hydrogen halides. The process of claim 1, **characterized in that** silicon is contacted with a gas atmosphere of a halogen or of a halogen compound and exposed to microwave energy.

2. Process according to Claim 1, **characterized in that** silicon is contacted with a gas atmosphere of a halogen or of a halogen compound and exposed to microwave energy.

3. Process according to Claim 1 or 2, **characterized in that** crystalline, especially coarsely crystalline, silicon is used.

4. Process according to Claim 1 or 2, **characterized in that** amorphous silicon is used.

5. Process according to Claim 4, **characterized in that** amorphous silicon is used in a mixture with crystalline silicon.

6. Process according to at least one of Claims 1 to 5, **characterized in that** silicon is used in conjunction with a catalyst or promoter.

7. Process according to at least one of Claims 1 to 6, **characterized in that** silicon is used in conjunction with a substance which absorbs microwave energy and transfers thermal energy to silicon.

8. Process according to at least one of Claims 1 to 7, **characterized in that** hydrogen halide is used.

9. Process according to at least one of Claims 1 to 8, **characterized in that** the catalyst or promoter used is a metal or metal compound, especially Cu.

10. Process according to at least one of Claims 1 to 9, **characterized in that** nonpulsed microwave energy is used.

11. Process according to at least one of Claims 1 to 10, **characterized in that** silicon having a particle size of > 70 µm is used.

12. Process according to at least one of Claims 1 to 11, **characterized in that** the halogen compound used is an organohalogen compound, in particular alkyl or aryl halides, especially methyl chloride.

13. Process according to at least one of Claims 1 to 12, **characterized in that** the silicon used is a silicon alloy, especially ferrosilicon.

14. Process according to Claim 1, **characterized in that** compounds of the FₙSiH₄₋ₙ type where n = 1-3 are prepared by contacting elemental silicon under microwave excitation with mixtures of fluorosilanes with hydrogen or hydrogen fluoride or hydrogen and hydrogen fluoride.

15. Process according to Claim 14, **characterized in that** compounds of the FₙSiH₄₋ₙ type where n = 1-3 are prepared by contacting elemental silicon under microwave excitation with mixtures of SiF₄ gas with hydrogen or hydrogen fluoride or hydrogen and hydrogen fluoride.

16. Process according to Claim 1, **characterized in that** compounds of the ClₙSiH₄₋ₙ type where n = 1-3 are prepared by contacting elemental silicon under microwave excitation with mixtures of hydrogencontaining chlorosilanes with hydrogen or hydrogen chloride or hydrogen and hydrogen chloride.

17. Process according to at least one of Claims 14 to 16, **characterized in that** a mixture of different compounds of the XₙSiH₄₋ₙ type where X is fluorine or chlorine is prepared.

18. Process according to Claim 17, **characterized in that** the mixture is separated by low-temperature distillation (condensation) or liquid distillation.

19. Process according to any of Claims 14 to 18, **characterized in that** the degree of hydrogenation is regulated by varying the hydrogen or hydrogen halide or the gas pressure of the hydrogen and hydrogen halide.

20. Process according to at least one of Claims 14 to 19, **characterized in that** the XnSiH₄₋ₙ compounds obtained where X is fluorine or chlorine are decomposed pyrolytically to obtain highly pure silicon.

21. Process according to Claim 20, **characterized in that** the gases formed in the course of the pyrolytic decomposition are recycled back into the system for the purposes of recycling or reused directly to synthesize SiX₄ where X is fluorine or chlorine.

22. Process according to Claim 1, **characterized in that** elemental silicon is contacted under microwave excitation with mixtures of organohalogen compounds with hydrogen or hydrogen halide or hydrogen and hydrogen halide.

23. Process according to Claim 1, **characterized in that** the hydrocarbon used is methane or ethane.

## Revendications

1. Procédé de préparation de silanes halogénés de formule générale (I) :
**RₐH_{b}SiX_{c}** **(I)**
dans laquelle :
R représente un radical alkyle ou aryle substitué ou non substitué, renfermant de 1 à 10 atomes de carbone, dans lequel un ou plusieurs atomes de carbone peuvent être remplacés par un groupe -CO-, un groupe -CO₂-, un groupe -O-, un groupe -S-, un groupe -SO-, un groupe -SO₂-, un groupe -NH- ou un groupe -NR'-, dans lequel R' représente un radical alkyle substitué ou non substitué, renfermant de 1 à 20 atomes de carbone,
X représente un atome de fluor, un atome de chlore ou un atome de brome,
a représente l'entier 0, 1, 2 ou 3,
b représente l'entier 0, 1, 2 ou 3, et
c représente l'entier 1, 2, 3 ou 4,
à condition que la somme a + b + c = 4,
**caractérisé en ce que** du silicium est mis à réagir, sous l'action d'énergie micro-ondes, avec des mélanges des éléments ou des composés choisis dans le groupe constitué d'halogènes ou d'halogènes et de composés organohalogénés ou d'halogènes et d'hydrogène ou d'halogènes et d'halogénures d'hydrogène ou de composés organohalogénés ou de composés organohalogénés et d'hydrogène ou de composés organohalogénés et d'halogénure d'hydrogène ou d'halogénures d'hydrogène ou de fluorosilanes et d'hydrogène ou de fluorosilanes et d'halogénure d'hydrogène ou de chlorosilanes renfermant de l'hydrogène et d'hydrogène ou de chlorosilanes renfermant de l'hydrogène et d'halogénures d'hydrogène ou d'organohalogénosilanes et d'hydrogène ou d'organohalogénosilanes et d'halogénures d'hydrogène ou d'hydrocarbures et d'halogénures d'hydrogène.

2. Procédé selon la revendication 1, **caractérisé en ce que** du silicium est mis en contact avec une atmosphère gazeuse d'un halogène ou d'un composé halogéné et exposé à de l'énergie micro-ondes.

3. Procédé selon la revendication 1 ou 2, **caractérisé en ce que** l'on utilise du silicium cristallin, en particulier, en gros cristaux.

4. Procédé selon la revendication 1 ou 2, **caractérisé en ce que** l'on utilise du silicium amorphe.

5. Procédé selon la revendication 4, **caractérisé en ce que** l'on utilise du silicium amorphe en mélange avec du silicium cristallin.

6. Procédé selon au moins l'une des revendications 1 à 5, **caractérisé en ce que** l'on utilise du silicium en association avec un catalyseur ou un promoteur.

7. Procédé selon au moins l'une des revendications 1 à 6, **caractérisé en ce que** l'on utilise du silicium en association avec une substance absorbant de l'énergie micro-ondes et transférant de l'énergie thermique à du silicium.

8. Procédé selon au moins l'une des revendications 1 à 7, **caractérisé en ce que** l'on utilise de l'halogénure d'hydrogène.

9. Procédé selon au moins l'une des revendications 1 à 8, **caractérisé en ce que** l'on utilise, en tant que catalyseur ou promoteur, des métaux ou des composés métalliques, en particulier du Cu.

10. Procédé selon au moins l'une des revendications 1 à 9, **caractérisé en ce que** l'on utilise de l'énergie micro-ondes non pulsée.

11. Procédé selon au moins l'une des revendications 1 à 10, **caractérisé en ce que** l'on utilise du silicium présentant une granulométrie supérieure à 70 µm.

12. Procédé selon au moins l'une des revendications 1 à 11, **caractérisé en ce que** l'on utilise, en tant que composé halogéné, des composés organohalogénés, en particulier des halogénures d'alkyle ou d'aryle, spécifiquement du chlorure de méthyle.

13. Procédé selon au moins l'une des revendications 1 à 12, **caractérisé en ce que** l'on utilise, en tant que silicium, des alliages de silicium, en particulier, du ferrosilicium.

14. Procédé selon la revendication 1, **caractérisé en ce que**, pour la préparation de composés du type FₙSiH₄₋ₙ, dans lesquels n vaut de 1 à 3, du silicium élémentaire est mis en contact, sous une excitation par micro-ondes, avec des mélanges de fluorosilanes avec de l'hydrogène ou du fluorure d'hydrogène ou de l'hydrogène et du fluorure d'hydrogène.

15. Procédé selon la revendication 14, **caractérisé en ce que**, pour la préparation de composés du type FₙSiH₄₋ₙ, dans lesquels n vaut de 1 à 3, du silicium élémentaire est mis en contact, sous une excitation par micro-ondes, avec des mélanges de SiF₄ gazeux avec de l'hydrogène ou du fluorure d'hydrogène ou de l'hydrogène et du fluorure d'hydrogène.

16. Procédé selon la revendication 1, **caractérisé en ce que**, pour la préparation de composés du type ClₙSiH₄₋ₙ, dans lesquels n vaut de 1 à 3, du silicium élémentaire est mis en contact, sous une excitation par micro-ondes, avec des mélanges de chlorosilanes renfermant de l'hydrogène avec de l'hydrogène ou du chlorure d'hydrogène ou de l'hydrogène et du chlorure d'hydrogène.

17. Procédé selon au moins l'une des revendications 14 à 16, **caractérisé en ce que** l'on prépare un mélange de divers composés du type XₙSiH₄₋ₙ, dans lesquels X représente un atome de fluor ou un atome de chlore.

18. Procédé selon la revendication 17, **caractérisé en ce que** le mélange est séparé par distillation à basse température (condensation) ou par distillation liquide.

19. Procédé selon l'une quelconque des revendications 14 à 18, **caractérisé en ce que** le degré d'hydrogénation est régulé par la variation de la pression gazeuse d'hydrogène ou d'halogénure d'hydrogène ou d'hydrogène et d'halogénure d'hydrogène.

20. Procédé selon au moins l'une des revendications 14 à 19, **caractérisé en ce** les composés XₙSiH₄₋ₙ obtenus, dans lesquels X représente un atome de fluor ou un atome de chlore, sont soumis à une décomposition pyrolytique en vue d'obtenir du silicium à pureté élevée.

21. Procédé selon la revendication 20, **caractérisé en ce que** les gaz formés lors de la décomposition pyrolytique sont de nouveau introduits dans le système dans le but d'un recyclage ou directement réutilisés pour la synthèse de SiX₄, X représentant un atome de fluor ou un atome de chlore.

22. Procédé selon la revendication 1, **caractérisé en ce que** du silicium élémentaire est mis en contact, sous une excitation par micro-ondes, avec des mélanges de composés organohalogénés avec de l'hydrogène ou de l'halogénure d'hydrogène ou de l'hydrogène et de l'halogénure d'hydrogène.

23. Procédé selon la revendication 1, **caractérisé en ce que** l'on utilise du méthane ou de l'éthane en tant qu'hydrocarbure.
